# EUROPÄISCHE PATENTSCHRIFT

(11) **EP 2 411 274 B1**
(45) Veröffentlichungstag und Bekanntmachung des Hinweises auf die Patenterteilung: **03.05.2017**
(21) Anmeldenummer: 10709471.6
(22) Anmeldetag: 09.03.2010
(51) Int. Cl.: B64D 11/02, B64D 11/04, B64D 11/00

(54) **INTEGRIERTES MONUMENT**
INTEGRATED MONUMENT
MODULE DE STOCKAGE INTÉGRÉ

(30) Priorität: 24.03.2009 DE 102009014601; 24.03.2009 US 162796 P
(43) Veröffentlichungstag der Anmeldung: 01.02.2012
(73) Patentinhaber: Airbus Operations GmbH, 21129 Hamburg (DE)
(72) Erfinder: EHLERS, Bernd, 20144 Hamburg (DE); HERZOG, Mark, 22885 Barsbüttel (DE)
(74) Vertreter: Lorenz & Kopf PartG mbB Patentanwälte, LKGLOBAL
(86) Internationale Anmeldenummer: PCT/EP2010/052973
(87) Internationale Veröffentlichungsnummer: WO 2010/108780

(56) Entgegenhaltungen:
- EP-A2- 1 626 470
- WO-A1-2006/087168
- DE-A1- 10 308 498
- DE-A1-102007 013 949
- US-A- 4 521 925
- US-A- 5 083 727
- US-A1- 2005 241 062
- US-A1- 2008 179 456

## Beschreibung

### Verwandte Anmeldungen

Die vorliegende Anmeldung beansprucht die Priorität der deutschen Patentanmeldung 10 2009 014 601.6, eingereicht am 24. März 2009 und der US Provisional Application 61/162,796, eingereicht am 24. März 2009, deren Inhalte hierin durch Referenz inkorporiert werden.

### Gebiet der Erfindung

Die Erfindung betrifft Monumente in Transportmitteln. Insbesondere betrifft die Erfindung ein Monument für ein Luftfahrzeug, die Verwendung eines derartigen Monuments in einem Luftfahrzeug sowie ein Luftfahrzeug mit einem solchen Monument.

### Technologischer Hintergrund

An Bord eines Verkehrsflugzeuges in der Größe der A320 befinden sich in der Regel drei bis vier Toiletten. Um dem Endabnehmer die Möglichkeit zu geben, die Kabine für seine Belange zu optimieren, sind mehr Stellplätze für Toiletten vorhanden als benötigt werden. Somit ist eine individuelle Platzierung der Toilettenmonumente in einem gewissen Rahmen möglich.

Durch die hohe Zahl an möglichen Stellplätzen und der Tatsache, dass im Laufe eines Flugzeuglebens dieses in der Regel von unterschiedlichen Betreibern betrieben wird und somit auch unterschiedliche Kabinen konfiguriert und eingerüstet werden, ergibt sich die Notwendigkeit, bei der Auslieferung Vorkehrungen einzurüsten, die es ermöglichen, Monumente nachträglich an anderen Stellplätzen einzurüsten. Bei solchen Monumenten handelt es sich beispielsweise um Bordtoiletten-Monumente oder Bordküchen-Monumente..

Diese Vorkehrungen kosten Platz, Geld und bringen zusätzliches Gewicht in das Flugzeug, oft ohne jemals tatsächlich auch genutzt zu werden.

DE 103 39 077 A1 und US 2005/0103935 A1 beschreiben ein Passagierabteil in der Kabine eines Verkehrsflugzeugs mit mehreren Toilettenmonumenten. Es ist ein Mehrzweckraum 1 beschrieben, der mit nur wenigen Handgriffen von einem Toilettenraum in einen neutral anmutenden Raum umgewandelt werden kann. Das Kabinenlayout wird dadurch nicht verändert.

US 5,083,727 beschreibt ein Flugzeugkabinensystem zur selektiven Lokalisierung von Inneneinrichtungen, die an eine Versorgungsleitung des Luftfahrzeugs angeschlossen werden. Es stellt den nächstliegenden Stand der Technik dar.

EP 1 626 470 A2 beschreibt ein Stromverteilungssystem zur elektrischen Versorgung von schienenmontierten Einbauten in einem Flugzeug. Das Stromverteilungssystem weist eine Sitzschiene auf, die einen isolierten ersten Stromleiter umfasst, von dem mittels eines einen zweiten Stromleiter umfassenden Verriegelungsbolzens Strom abgegriffen werden kann.

### Zusammenfassung der Erfindung

Es ist eine Aufgabe der Erfindung, ein Monument anzugeben, das eine höhere Flexibilität im Kabinenlayout gestattet.

Es sind ein Monument für ein Luftfahrzeug, die Verwendung eines Monuments in einem Luftfahrzeug und ein Luftfahrzeug gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Monument, die Verwendung und das Luftfahrzeug. In anderen Worten lassen sich auch alle im Folgenden beispielsweise im Hinblick auf das Monument genannten Merkmale für die Verwendung oder in dem Luftfahrzeug umsetzen, und umgekehrt.

Gemäß einem Ausführungsbeispiel der Erfindung ist ein Monument für ein Luftfahrzeug angegeben, welches eine erste Systemkomponente, eine Systemanschlussanordnung und eine Leitungsanordnung aufweist. Die Systemanschlussanordnung ist zum Anschluss der ersten Systemkomponente und einer weiteren, zweiten Systemkomponente an eine Versorgungsleitung des Luftfahrzeugs ausgeführt. Die Leitungsanordnung ist zum Verbinden der Systemanschlussanordnung mit der ersten Systemkomponente und der zweiten Systemkomponente ausgeführt, wobei die erste Systemkomponente und die zweite Systemkomponente identische (also zumindest einander entsprechende) Systemkomponenten sind. Hierunter fallen auch solche Systemkomponenten, die lediglich die gleichen oder ähnliche Funktionen aufweisen. Beispielsweise kann es sich bei der ersten Systemkomponente um eine Toilette handeln und bei der zweiten Systemkomponente um ein Pissoir. Oder aber die erste Systemkomponente ist z.B. eine behindertengerechte Toilette und die zweite Systemkomponente eine Standardtoilette.

In anderen Worten handelt es sich um ein kombiniertes Monument (Kombi-Monument) oder auch um ein erweiterbares Monument, welches vergrößert werden kann. Im Falle eines kombinierten Monuments weist das Monument zwei Systemkomponenten auf und im Falle eines erweiterbaren Monuments weist es zumindest die erste Systemkomponente sowie Anschlüsse für eine zweite Systemkomponente auf. Beide Systemkomponenten entsprechen einander, weisen also dieselben oder ähnliche Funktionen auf, müssen aber nicht vollkommen identisch sein.

In jedem Fall reicht eine einzige Systemanschlussanordnung zum Anschluss beider Systemkomponenten an die Versorgungsleitung des Luftfahrzeugs, selbst wenn die beiden Systemkomponenten in verschiedenen Abteilungen des Monuments untergebracht sind.

Gemäß einem weiteren Ausführungsbeispiel der Erfindung ist das Monument ein Bordtoiletten-Monument.

Gemäß einem weiteren Ausführungsbeispiel der Erfindung weist das Bordtoiletten-Monument als erste und zweite Systemkomponenten zwei separate Toiletten auf. Auch kann es sich bei der ersten Systemkomponente um eine Toiletten oder ein Pissoir handeln und bei der zweiten Systemkomponente um eine Toilette oder eine Dusche.

Es ist also nicht mehr erforderlich, dass jede einzelne Toilette separat an eine eigene Systemanschlussanordnung angeschlossen ist. Vielmehr genügt eine einzige Systemanschlussanordnung (und entsprechende Versorgungsanschlüsse im Flugzeug) für beide Toiletten.

Auf diese Weise ist es möglich, dass ein bereits im Flugzeug integriertes, einzelnes Toilettenmonument durch das erfindungsgemäße Toilettenmonument mit zwei Bordtoiletten ausgetauscht wird, ohne dass zusätzliche Systemanschlussanordnungen hierfür vorgesehen sein müssten.

Gemäß einem weiteren Ausführungsbeispiel der Erfindung handelt es sich bei dem Monument um ein Bordküchen-Monument. Beispielsweise handelt es sich in diesem Fall bei den Systemkomponenten um Waschbecken oder elektrische Kücheneinrichtungen.

Gemäß einem weiteren Ausführungsbeispiel der Erfindung ist das Monument zum Einbau in eine Passagierkabine eines Flugzeugs ausgeführt und insbesondere ist das Monument ausgeführt, bereits bekannte, standardisierte Einzelmonumente zu ersetzen.

Gemäß einem weiteren Ausführungsbeispiel der Erfindung ist das Monument als Kombimodul zum Ersetzen von zwei identischen Einzelmonumenten ausgeführt. Bei den zwei identischen Einzelmonumenten handelt es sich beispielsweise um Bordtoiletten-Monumente.

Gemäß einem weiteren Ausführungsbeispiel der Erfindung weist das Monument eine dritte Systemkomponente in Form eines ersten Waschbeckens und eine vierte Systemkomponente in Form des zweiten Waschbeckens auf. Die Systemanschlussanordnung dient nicht nur dem Anschluss der ersten beiden Systemkomponenten, sondern auch dem Anschluss der dritten Systemkomponente und der vierten Systemkomponente an eine Versorgungsleitung des Luftfahrzeugs. Die Leitungsanordnung dient zum Verbinden der Systemanschlussanordnung mit der dritten Systemkomponente und der vierten Systemkomponente.

insbesondere können die beiden Abteilungen des Monuments, in denen sich jeweils die erste oder zweite Systemkomponente befinden, unterschiedliche Größen aufweisen.

Gemäß einem weiteren Ausführungsbeispiel der Erfindung weist das Monument eine Steuerung auf, die dafür sorgt, dass alle Systemkomponenten insgesamt nicht mehr als eine vorbestimmte Höchstmenge an Wasser pro Zeiteinheit von einer Wasserversorgung des Luftfahrzeugs anfordern (und ggf. auch geliefert bekommen), so dass eine Überlastung der Wasserversorgung des Luftfahrzeugs vermieden wird.

Hierbei kann es sich beispielsweise um eine elektronische Steuerung handeln, die einerseits misst, wie viel Wasser die jeweiligen Benutzer insgesamt anfordern. Andererseits kann die elektronische Steuerung mit geeigneten Sensoren auch die tatsächliche Durchflussmenge des Wassers durch die Leitungsanordnung messen. Es können Steuerventile in den Leitungen vorgesehen sein, die den Durchfluss an geeigneten Stellen vermindern oder gar stoppen, falls erforderlich.

Auch kann es sich bei der Steuerung um eine rein mechanische Steuerung handeln, die beispielsweise verhindert, dass gleichzeitig Wasser durch zwei bestimmte Versorgungsleitungen fließt. Dies kann beispielsweise durch ein Dreiwegeventil erfolgen, das an einer Gabelung einer Versorgungsleitung angebracht ist und dafür sorgt, dass Wasser entweder in den einen Zweig oder in den anderen Zweig fließen kann. Auf diese Weise kann einfach sichergestellt werden, dass jeweils nur eine Toilette gespült werden kann.

Gemäß einem weiteren Ausführungsbeispiel der Erfindung ist die Steuerung zum Vermeiden eines gleichzeitigen Spülens der ersten und der zweiten Toilette ausgeführt.

Gemäß einem weiteren Ausführungsbeispiel der Erfindung weist das Monument eine Trennwand auf, wobei das erste Waschbecken an einer ersten Seite der Trennwand und das zweite Waschbecken an einer der ersten Seite gegenüberliegenden zweiten Seite der Trennwand angeordnet ist.

Gemäß einem weiteren Ausführungsbeispiel der Erfindung ist die Verwendung eines Monuments in einem Luftfahrzeug angegeben, wobei das Monument die oben und im Folgenden beschriebenen Merkmale aufweist.

Gemäß einem weiteren Ausführungsbeispiel der Erfindung weist das Luftfahrzeug insbesondere eine Passagierkabine und eine Sitzschiene bzw. mehrere Sitzschienen auf. Das Monument ist in der Passagierkabine angeordnet und lediglich an bestimmten Befestigungspunkten eines entsprechenden Einzelmonuments und den Sitzschienen an der tragenden Struktur des Luftfahrzeugs befestigt.

In anderen Worten können durch das erfindungsgemäße Monument genau die Befestigungspunkte verwendet werden, die auch für ein Einzelmonument, wie es früher in Luftfahrzeuge eingebaut wurde, verwendet werden.

Durch die erfindungsgemäßen Monumente können zusätzliche Monumentstellplätze und Monumentstellflächen geschaffen werden, ohne dabei flugzeugseitig zusätzliche Vorkehrungen treffen zu müssen. Dabei wird anstelle eines Einzelmonuments (beispielsweise ein Bordtoiletten-Monument) ein vergrößertes Monument installiert, welches zwei Toiletten und zwei Waschbecken aufweist. Auch ist es möglich, ein Grundmodul des erfindungsgemäßen Monuments (welches nur eine Toilette und ein Waschbecken aber eine entsprechende Leitungsanordnung zum Anschluss eines zweiten Waschbeckens und einer zweiten Toilette aufweist) um eben diese zweite Toilette und das zweite Waschbecken zu erweitern. Das Erweiterungsmodul mit der zweiten Toilette und dem zweiten Waschbecken kann derart ausgeführt sein, dass es Anschlüsse für ein weiteres Erweiterungsmodul aufweist, so dass in Summe dann drei Toiletten mit drei Waschbecken eingebaut werden können, ohne dass hierfür zusätzliche flugzeugseitige Versorgungsleitungen vorgesehen sein müssten.

Die Systemanschlüsse des Grundmonuments sind identisch zu den Systemanschlüssen bekannter Einzelmonumente.

Im Folgenden werden mit Verweis auf die Figuren Ausführungsbeispiele der Erfindung beschrieben.

### Kurze Beschreibung der Figuren

- Fig. 1: zeigt zwei separate Toilettenmonumente.
- Fig. 2: zeigt ein Monument gemäß einem Ausführungsbeispiel der Erfindung.
- Fig. 3: zeigt ein Monument gemäß einem weiteren Ausführungsbeispiel der Erfindung.
- Fig. 4: zeigt ein Luftfahrzeug gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

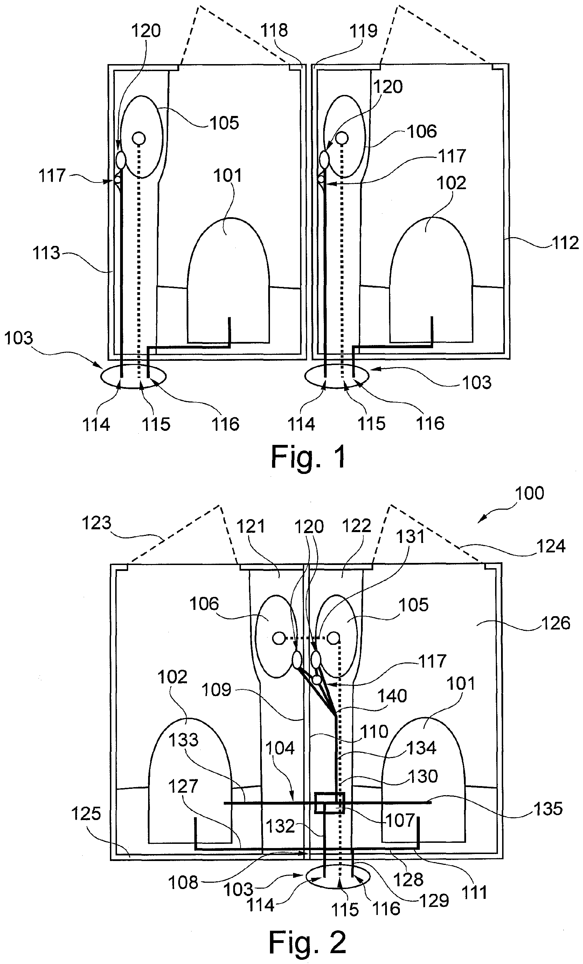

Fig. 1 zeigt zwei identische Einzelmonumente 112, 113 für ein Flugzeug, die nebeneinander angeordnet sind. Jedes der beiden Monumente weist eine eigene Systemanschlussanordnung 103 auf, welche mit einer entsprechenden Versorgungsleitung des Flugzeugs verbunden wird. Auch die Versorgungsleitung muss also zwei Schnittstellengruppen aufweisen, je eine für eine Systemanschlussanordnung 103.

Die Systemanschlussanordnung 103 weist einen Frischwasseranschluss 114, einen Grauwasseranschluss 115 zum Abführen von Grauwasser und einen Schwarz- oder Abwasseranschluss 116 zum Abführen von Abwasser der Bordtoilette auf.

Jedes der beiden Module 112, 113 besitzt seine "eigenen vier Wände". Insbesondere ist die Abtrennung zwischen den beiden Modulen doppelwandig, da jedes der beiden Module seine eigene Außenwand 118, 119 aufweist.

In jedem der Module befindet sich ein Waschbecken 105, 106 sowie eine Toilette 101, 102. Die Armaturen 120 der Waschbecken werden über eigene Zuleitungen von der Frischwasserversorgung 114 mit Frischwasser versorgt. In die Frischwasserversorgungsleitung kann ein Heizer 117 eingebaut sein, um das Wasser zu erwärmen.

Fig. 2 zeigt ein Monument 100 in der Ausführung einer Doppeltoilette gemäß einem Ausführungsbeispiel der Erfindung. Es ist nur noch eine einzelne Trennwand 108 vorgesehen, um die beiden Toilettenbereiche voneinander zu trennen.

Weiterhin weist das Monument eine linke Seitenwand 123 und eine rechte Seitenwand 124 sowie eine rückseitige Wand 125 und eine Decke 126 auf.

Das Monument 100 weist lediglich eine Systemanschlussanordnung 103 auf, welche mit den im Flugzeug integrierten Versorgungsleitungen verbunden werden kann. Die Systemanschlussanordnung 103 weist insbesondere Anschlüsse für Frischwasser 114, Grauwasser 115 und Schwarz- oder Abwasser 116 auf.

Die Frischwasserversorgung 114 ist über die Leitungsanordnung 104 mit dem ersten Waschbecken 105 und der ersten Toilette 101 verbunden. Hierfür ist eine Gabelung der Leitung 132 vorgesehen, wobei der rechte Leitungsast 135 zur rechten Toilette 102 führt, der rechte Leitungsast 133 zur linken Toilette 101 und der obere Leitungsast 134 zu den Waschbecken.

Insbesondere kann vorgesehen sein, dass die Leitung 134 beide Waschbecken 105, 106 versorgt. Hierfür ist eine Dreifachgabelung 140 vorgesehen. Der erste, linke Ast der Leitungsanordnung läuft von der Gabelung 140 als Kaltwasserversorgung zum linken Waschbecken 105 bzw. zur Armatur 120 des linken Waschbeckens 105. Der rechte Ast läuft ebenfalls als Kaltwasserversorgung zur rechten Armatur 120 des rechten Waschbeckens 106. Der mittlere Ast läuft durch eine Heizvorrichtung 117 und gabelt sich dann auf in zwei weitere Äste, wobei der linke Ast zum ersten Waschbecken 105 und der rechte Ast zum zweiten Waschbecken 106 (bzw. deren Armaturen 120) führt.

Es ist möglich, dass sämtliche Leitungen, die von der rechten Modulhälfte durch die Trennwand 108 in die linke Modulhälfte führen, in bzw. an der Trennwand eine Schnittstelle aufweisen, so dass die Leitungen der linken Modulhälfte dort angeschlossen und wahlweise wieder entfernt werden können.

Auf diese Weise ist es möglich, ein Monument zu schaffen, dessen linke Hälfte bedarfsweise auf- oder abgebaut werden kann.

An der ersten Gabelung zwischen der Frischwasserleitung 132 und dem linken und rechten Ast 133 bzw. 134 kann eine Steuerung 107 vorgesehen sein, beispielsweise in Form eines Zweiwege- bzw. Dreiwegeventils. Diese Steuerung kann den maximal möglichen Durchfluss durch die Frischwasserversorgungsleitung 132 kontrollieren und steuern.

Weiterhin kann eine Leitung 135 vorgesehen sein, die ebenfalls an der ersten Gabelung angeschlossen ist und über die Steuerung 107 gesteuert werden kann und zur zweiten Toilette 102 führt.

Die Steuerung 107 ist also in der Lage, beispielsweise zwischen den beiden Versorgungsleitungen 133 zur ersten Toilette 101 und 135 zur zweiten Toilette 102 umzuschalten und ggf. auch die Versorgungsleitung 134 zu den beiden Waschbecken abzuschalten, falls erforderlich.

Die beiden Waschbecken 105, 106 sind in entsprechende Waschtische 121, 122 integriert. Jedes der Waschbecken weist eine eigene Armatur 120 auf.

Die Trennwand 108 weist eine linke Seite 109 und eine rechte Seite 110 auf, wobei das eine Waschbecken 105 an der linken Seite und das andere Waschbecken 106 an der rechten Seite angeordnet und ggf. auch befestigt ist.

Die Toilettenabwässer werden von den Entsorgungsleitungen 127 (von der linken Toilette) bzw. 128 (von der rechten Toilette) und danach über die Zentralleitung 129 und den Anschluss 116 an die Abwasserabführung des Flugzeugs geführt. Alle Abwasserversorgungsleitungen zusammengenommen sind mit dem Bezugszeichen 111 bezeichnet.

Die Grauwasserabführung über das linke Waschbecken erfolgt über die Leitung 131, die durch die Wand 108 zum rechten Waschbecken 106 hindurchgeführt ist und vom rechten Waschbecken 106 führt die Leitung 130 zur Grauwasserentsorgung (siehe Anschluss 115).

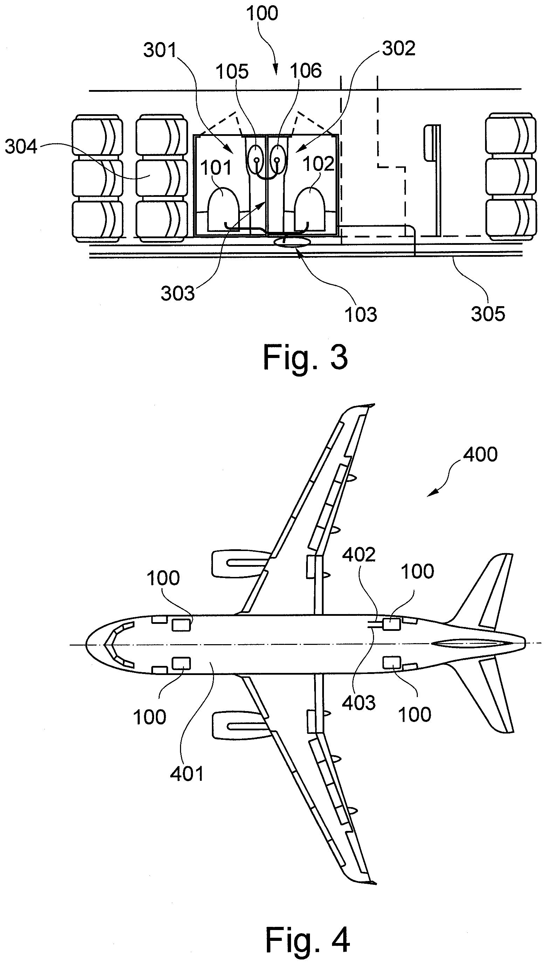

Fig. 3 zeigt ein Bordtoiletten-Monument gemäß einem Ausführungsbeispiel der Erfindung. Das Bordtoiletten-Monument 100 weist eine linke Toilettenzelle 301 und eine rechte Toilettenzelle 302 auf. Jede der Zellen weist eine eigene Toilette 101, 102 und ein eigenes Waschbecken 105, 106 auf. Die Waschbecken und die Toiletten sind über entsprechende Leitungsanordnungen an eine Systemanschlussanordnung 103 angeschlossen. Hierfür ist die Verrohrung 303 innerhalb des Monuments vorgesehen.

Wie in Fig. 3 zu erkennen, ist das Kombimodul 100 vor der Sitzreihe 304 an der Bordwand 305 im Bereich des Ausgangs aufgestellt.

Die Architekturoptimierung durch die beschriebenen integrierten Monumente (beispielsweise in Form einer Doppeltoilette) ermöglicht das Einrüsten einer zusätzlichen Toilette, ohne dass im Vergleich zu einer Standardtoilette zusätzliche Vorkehrungen getroffen werden müssen. Alle notwendigen Installationen und Vorkehrungen sind Bestandteil des Doppelmonuments 100. Dies führt zu einer reduzierten Anzahl von Vorkehrungen zur Monumenteinrüstung bei gleichbleibender Installationsvielfalt und somit zu einer Gewichts- und Kosteneinsparung. Ferner ergeben sich für den Betreiber keine Nachteile, falls er ein Einzelmonument installieren möchte. Es sind keine zusätzlichen Vorkehrungen für das Doppelmonument zu installieren, die hier nicht genutzt werden. Es handelt sich im Prinzip um ein Monument mit zwei Toilettenkabinen.

Dabei bietet die eine Toilette die gleiche Anschlussphilosophie wie ein Einzelmonument. Die zweite Toilette hat nur Systemanschlüsse innerhalb des Monuments und teilt evtl. auch deren Systeme (wie Durchlauferhitzer, Staufach für Papier, Feuerlöscheinrichtung, Abwassersystem, Sauerstoffmasken samt Generator, etc.).

Die Waschtische stehen sich beispielsweise an der Trennwand 108 zwischen den beiden Kabinen gegenüber und ermöglichen eine optimale Doppelnutzung der Systeme. Eine

Überlastung der Systemanschlüsse wird durch eine angebrachte Systemarchitektur vermieden. Hierfür ist beispielsweise die Steuerung 107 vorgesehen, die ein gleichzeitiges Spülen der Toiletten verhindert. Die zusätzliche strukturelle Befestigung dieses Doppelmonuments 100 erfolgt beispielsweise lediglich über die bereits vorhandenen Befestigungspunkte eines Einzelmonuments und den Sitzschienen. Somit ist auch eine Nachrüstung in bestehende Flugzeugmuster möglich.

Die Anzahl an vorzusehenden Stellplätzen für eine Toilette kann über das gesamte Flugzeug reduziert werden, wodurch sich Kosteneinsparungen ergeben. Durch die gemeinsame Nutzung einiger Monumentkomponenten ergibt sich im Vergleich zu einer Einzeltoilette eine Gewichtseinsparung.

Fig. 4 zeigt ein Luftfahrzeug 400. Das Luftfahrzeug 400 weist eine Passagierkabine 401 auf, in der sich an den Ausgängen jeweils ein erfindungsgemäßes Monument befindet. In dem gezeigten Ausführungsbeispiel sind vier solche Monumente vorgesehen, zwei an der Steuerbordseite des Flugzeugs und zwei an der Backbordseite.

Jedes dieser Monumente kann beispielsweise über zwei oder mehr Sitzschienen 402, 403 mit der Primärstruktur des Flugzeugs verbunden werden bzw. am Boden der Kabine befestigt werden.

Anstelle von Toiletten können auch Küchengeräte und dergleichen in das Monument eingebaut werden, so dass eine modular erweiterbare Bordküche bereitgestellt wird bzw. so dass ein bestehendes Bordküchen-Monument durch ein kombiniertes, also erweitertes Bordküchen-Monument ersetzt werden kann, ohne dass hierfür andere Anschlüsse im Flugzeug benutzt werden müssten als für das Einzelmonument.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Monument für ein Luftfahrzeug, das Monument (100) aufweisend:
eine erste Systemkomponente (101);
eine Systemanschlussanordnung (103);
eine Leitungsanordnung (104);
eine Trennwand (108);
wobei die Systemanschlussanordnung (103) zum Anschluss der ersten Systemkomponente (101) und einer zweiten Systemkomponente (102) an eine Versorgungsleitung des Luftfahrzeugs ausgeführt ist;
wobei die Leitungsanordnung (104, 111) eine Leitung (132) mit einer Gabelung aufweist, die zum Verbinden der Systemanschlussanordnung (103) mit der ersten Systemkomponente (101) und der zweiten Systemkomponente (102) ausgeführt ist;
wobei die erste Systemkomponente (101) und die zweite Systemkomponente (102) identische Systemkomponenten sind ; **dadurch gekennzeichnet, dass** die Leitungsanordnung (104, 111) eine Schnittstelle in bzw. an der Trennwand (108) aufweist.

2. Monument nach Anspruch 1,
wobei das Monument ein Bordtoiletten-Monument ist.

3. Monument nach Anspruch 2,
wobei das Bordtoiletten-Monument als erste und zweite Systemkomponente (101, 102) zwei separate Toiletten (101, 102) aufweist.

4. Monument nach Anspruch 1,
wobei das Monument ein Bordküchen-Monument ist.

5. Monument nach einem der vorhergehenden Ansprüche, ausgeführt zum Einbau in eine Passagierkabine eines Flugzeugs.

6. Monument nach einem der vorhergehenden Ansprüche, ausgeführt als Kombimodul zum Ersetzen von zwei identischen Einzelmonumenten (112, 113).

7. Monument nach einem der vorhergehenden Ansprüche, weiterhin aufweisend:
eine dritte Systemkomponente (105) in Form eines ersten Waschbeckens (105); und
eine vierte Systemkomponente (106) in Form eines zweiten Waschbeckens (106);
wobei die Systemanschlussanordnung (103) zum Anschluss der dritten Systemkomponente (105) und der vierten Systemkomponente (106) an eine Versorgungsleitung des Luftfahrzeugs ausgeführt ist;
wobei die Leitungsanordnung (104) zum Verbinden der Systemanschlussanordnung (103) mit der dritten Systemkomponente (105) und der vierten Systemkomponente (106) ausgeführt ist.

8. Monument nach einem der vorhergehenden Ansprüche, weiterhin aufweisend:
eine Steuerung (107), die dafür sorgt, dass alle Systemkomponenten (101, 102, 105, 106) insgesamt nicht mehr als eine vorbestimmte Höchstmenge an Wasser pro Zeiteinheit von einer Wasserversorgung des Luftfahrzeugs anfordern, so dass eine Überlastung der Wasserversorgung vermieden wird.

9. Monument nach Anspruch 8,
wobei die Steuerung (107) zur Vermeidung eines gleichzeitigen Spülens der ersten und der zweiten Toilette (101, 102) ausgeführt ist.

10. Monument nach einem der vorhergehenden Ansprüche, weiterhin aufweisend:
eine Trennwand (108);
wobei das erste Waschbecken (105) an einer ersten Seite (109) der Trennwand (108) und das zweite Waschbecken (106) an einer der ersten Seite gegenüberliegenden zweiten Seite (110) der Trennwand (108) angeordnet ist.

11. Verwendung eines Monuments nach einem der Ansprüche 1 bis 10 in einem Luftfahrzeug.

12. Luftfahrzeug (400) mit einem Monument (100) nach einem der Ansprüche 1 bis 10.

13. Luftfahrzeug nach Anspruch 12, aufweisend:
eine Passagierkabine (501);
Sitzschienen (502, 503);
wobei das Monument in der Passagierkabine angeordnet ist und lediglich an Befestigungspunkten eines entsprechenden Einzelmonuments und den Sitzschienen in dem Luftfahrzeug befestigt ist.

## Claims

1. Monument for an aircraft, the monument (100) comprising:
a first system component (101);
a system connection arrangement (103);
a line arrangement (104);
a separating wall (108);
wherein the system connection arrangement (103) is configured for connecting the first system component (101) and a second system component (102) to a supply line of the aircraft;
wherein the line arrangement (104, 111) comprises a line (132) with a bifurcation which is configured for connecting the system connection arrangement (103) with the first system component (101) and the second system component (102);
wherein the first system component (101) and the second system component (102 are identical system components;
**characterized in that**
the line arrangement (104, 111) comprises an interface in or at the separating wall (108).

2. Monument according to claim 1,
wherein the monument is a lavatory monument.

3. Monument according to claim 2,
wherein the lavatory monument comprises two separate lavatories (101, 102) as first and second system component (101, 102).

4. Monument according to claim 1,
wherein the monument is a galley monument.

5. Monument according to one of the preceding claims, configured for installation in a passenger cabin of an airplane.

6. Monument according to one of the preceding claims, designed as a combined module for replacing two identical individual monuments (112, 113).

7. Monument according to one of the preceding claims, furthermore comprising:
a third system component (105) in the form of a first wash basin (105); and
a fourth system component (106) in the form of a second wash basin (106);
wherein the system connection arrangement (103) is configured for connecting the third system component (105) and the fourth system component (106) to a supply line of the aircraft;
wherein the line arrangement (104) is configured for connecting the system connection arrangement (103) with the third system component (105) and the fourth system component (106).

8. Monument according to one of the preceding claims, furthermore comprising:
a control unit (107) which ensures that all system components (101, 102, 105, 106) together do not request more water per time unit from a water supply of the aircraft than a predetermined maximum quantity, so that an overload situation of the water supply is avoided.

9. Monument according to claim 8,
wherein the control unit (107) is configured to avoid flushing the first and the second lavatory (101, 102) at the same time.

10. Monument according to one of the preceding claims, furthermore comprising:
a separating wall (108);
wherein the first wash basin (105) is arranged at a first side (109) of the separating wall (108) and the second wash basin (106) is arranged at a second side (110) opposite to the first side of the separating wall (108).

11. Use of a monument according to one of claims 1 to 10 in an aircraft.

12. Aircraft (400) with a monument (100) according to one of claims 1 to 10.

13. Aircraft according to claim 12, comprising:
a passenger cabin (501);
seat rails (502, 503);
wherein the monument is arranged in the passenger cabin and is fastened in the aircraft merely at fixation points of a corresponding individual monument and at the seat rails.

## Revendications

1. Structure pour un aéronef, la structure (100) présentant :
un premier composant du système (101) ;
un agencement de raccordement du système (103) ;
un agencement de conduites (104) ;
une paroi de séparation (108) ;
dans laquelle l'agencement de raccordement du système (103) est réalisé pour le raccordement du premier composant du système (101) et d'un deuxième composant du système (102) à une conduite d'alimentation de l'aéronef ;
dans laquelle l'agencement de conduites (104, 111) présente une conduite (132) ayant un embranchement qui est réalisé pour relier l'agencement de raccordement du système (103) au premier composant du système (101) et au deuxième composant du système (102) ;
dans laquelle le premier composant du système (101) et le deuxième composant du système (102) sont des composants du système identiques ;
**caractérisé en ce que**
l'agencement de conduites (104, 111) présente une interface dans ou sur la paroi de séparation (108).

2. Structure selon la revendication 1,
dans laquelle la structure est une structure de toilettes de bord.

3. Structure selon la revendication 2,
dans laquelle la structure de toilettes de bord présente deux toilettes séparées (101, 102) en tant que premier et deuxième composants du système (101, 102).

4. Structure selon la revendication 1,
dans laquelle la structure est une structure de cuisine de bord.

5. Structure selon l'une quelconque des revendications précédentes, réalisée pour le montage dans une cabine de passagers d'un avion.

6. Structure selon l'une quelconque des revendications précédentes, réalisée en tant que module combiné destiné à remplacer deux structures individuelles identiques (112, 113).

7. Structure selon l'une quelconque des revendications précédentes, présentant en outre :
un troisième composant du système (105) sous forme d'un premier lavabo (105) ; et
un quatrième composant du système (106) sous forme d'un deuxième lavabo (106) ;
dans laquelle l'agencement de raccordement du système (103) est réalisé pour le raccordement du troisième composant du système (105) et du quatrième composant du système (106) à une conduite d'alimentation de l'aéronef ;
dans laquelle l'agencement de conduites (104) est réalisé pour relier l'agencement de raccordement du système (103) au troisième composant du système (105) et au quatrième composant du système (106).

8. Structure selon l'une quelconque des revendications précédentes, présentant en outre :
une commande (107) qui assure que tous les composants du système (101, 102, 105, 106) demandent en tout pas plus qu'une quantité maximale prédéterminée d'eau par unité de temps d'une alimentation en eau de l'aéronef, de sorte qu'une surcharge de l'alimentation en eau est évitée.

9. Structure selon la revendication 8,
dans laquelle la commande (107) est réalisée pour éviter une chasse d'eau simultanée des premières et deuxièmes toilettes (101, 102).

10. Structure selon l'une quelconque des revendications précédentes, présentant en outre :
une cloison (108) ;
dans laquelle le premier lavabo (105) est disposé sur une première face (109) de la cloison (108) et le deuxième lavabo (106) est disposé sur une deuxième face (110) de la cloison (108) située à l'opposé de la première face.

11. Utilisation d'une structure selon l'une quelconque des revendications 1 à 10 dans un aéronef.

12. Aéronef (400) comprenant une structure (100) selon l'une quelconque des revendications 1 à 10.

13. Aéronef selon la revendication 12, présentant :
une cabine de passagers (501) ;
des rails de siège (502, 503) ;
dans laquelle la structure est disposée dans la cabine de passagers et est fixée dans l'aéronef uniquement à des points de fixation d'une structure individuelle correspondante et sur les rails de siège.
